# EUROPEAN PATENT APPLICATION

(11) **EP 4 617 193 A1**
(43) Date of publication of application: **17.09.2025**
(21) Application number: 25157157.6
(22) Date of filing: 11.02.2025
(51) Int. Cl.: B65D 25/48, B65D 5/74, B67B 7/00

(54) **REUSABLE OPENING DEVICE FOR A PACKAGE AND PACKAGE HAVING A REUSABLE OPENING DEVICE**

(30) Priority: 14.03.2024 IT 202400005710
(71) Applicant: Tetra Laval Holdings & Finance S.A., 1009 Pully (CH)
(72) Inventor: PALLAORO, Giovanni, 41123 Modena (IT); BARBIERI, Marcello, 41123 Modena (IT); INSERO, Marco, 41123 Modena (IT); PICCININI, Stefano, 41123 Modena (IT)
(74) Representative: Tetra Pak Patent Attorneys

(57) **Abstract**

There is described a reusable opening device (3) for a package (1) filled with a pourable product and having a designated pour opening area (7). The opening device (3) being configured to be removably connected to a main body (2) of the package (1) and comprising an outer body (16) configured to be placed outside of the main body (2) and having an outlet opening (18) configured to allow for an outpouring of the pourable product and a piercing body (17) configured to pierce the designated pour opening area (7) and to be placed within the package (2). The opening device (3) comprises a flow channel (21) extending along a central axis (B) of opening device (3) and between at least one main inlet opening (19) of the piercing body (17) and the outlet opening (18). The inlet opening (19) is configured allowing the inlet of the pourable product into the flow channel (21). The piercing body (17) comprises a cutting surface (30) configured to cut at least a portion of the designated pour opening area (7) during an insertion of the opening device (3) into the package (1). The cutting surface (30) extends along a first axis (E). The first axis (E) is laterally displaced along a second axis (F) perpendicular to the first axis (E) from the central axis (B) and the main inlet opening (19).

## Description

### TECHNICAL FIELD

The present invention relates to a reusable opening device for a package, preferentially a package filled with a pourable product, more preferentially a package filled with a pourable food product.

The present invention also relates to a package, preferentially a package filled with a pourable product, more preferentially a package filled with a pourable food product and having a reusable opening device removably connected to a main body of the package.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding a laminated packaging blank. The packaging blank has a multilayer structure comprising a fibrous base layer, e.g. of paper or cardboard, covered on both sides with layers of heat-seal plastic material, e.g. polyethylene. In the case of aseptic packages for long-storage products, such as UHT milk, the packaging blank also comprises a layer of oxygen-barrier material (an oxygen-barrier layer), **e.g.** an aluminum foil, which is superimposed on a layer of heat-seal plastic material and is in turn covered with another layer of heat-seal plastic material forming the inner face of the package eventually contacting the food product.

Some kinds of such packages comprise an opening device fixedly mounted onto a main body of the package formed from the multilayer packaging material. Typically, such opening devices are formed from a polymer.

The recent years important steps have been achieved in reducing the quantity of polymers needed for the production of packages being provided with opening devices.

Even though the known packages and opening devices work very well, a desire is felt in the sector to identify alternative solutions allowing to further reduce the use of polymers.

### DISCLOSURE OF INVENTION

It is therefore an object of the present invention to provide an improved opening device.

It is a further object of the present invention to provide an improved package.

According to the present invention, there is provided a reusable opening device according to the independent claim.

Further advantageous embodiments of the opening device are specified in the dependent claims.

According to the present invention, there is also provided a package according to claim 16.

### BRIEF DESCRIPTION OF THE DRAWINGS

A non-limiting embodiment of the present invention will be described by way of example with reference to the accompanying drawings, in which:
Figure 1 is a schematic perspective view of a package having a main body and an opening device according to the present invention, with parts removed for clarity;
Figure 2 is a perspective view of the opening device of Figure 1 in a first configuration;
Figure 3 is a perspective view of the opening device of Figure 1 in a second configuration;
Figure 4 is a top view of a portion of the opening device of Figure 1;
Figure 5 is a side view of the opening device of Figure 2;
Figure 6 is a sectioned lateral view of the opening device along the section plane as indicated in Figure 4; and
Figures 7A to 7C are schematic views on how to couple the opening device of Figure 1 to the main body of Figure 1.

### BEST MODES FOR CARRYING OUT THE INVENTION

Reference numeral 1 indicates as a whole a package comprising a main body 2 and a reusable opening device 3 removably and/or releasably coupled to or removably and/or releasably couplable to main body 2.

Preferentially, main body 2 may be filled with a pourable product, more preferentially a pourable food product, such as water, pasteurized milk, milk products, yoghurt, yoghurt drinks, fruit juice, other kind of beverages, sauces, salt, sugar or the like.

Package 1, preferentially main body 2, may be obtained from a multilayer packaging material having a multilayer structure (not shown).

The multilayer packaging material may comprise at least a layer of fibrous material, such as a paper or cardboard layer, and at least two layers of heat-seal plastic material, e.g. polyethylene, interposing the layer of fibrous material in between one another. One of these two layers of heat-seal plastic material may define an inner face of the respective package 1, preferentially the respective main body 2, eventually contacting the pourable product.

Preferentially, the multilayer packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, the multilayer packaging material may also comprise a further layer of heat-seal plastic material being interposed between the layer of gas- and light-barrier material and the layer of fibrous material.

According to some preferred non-limiting embodiment, the multilayer packaging material may be provided in the form of a web or as single packaging blanks.

In more detail, in case of the multilayer packaging material being provided in the form of a web, the web may define a plurality of repeat units successively arranged from one another. Preferentially, each repeat unit may define a respective precursor of one respective main body 2.

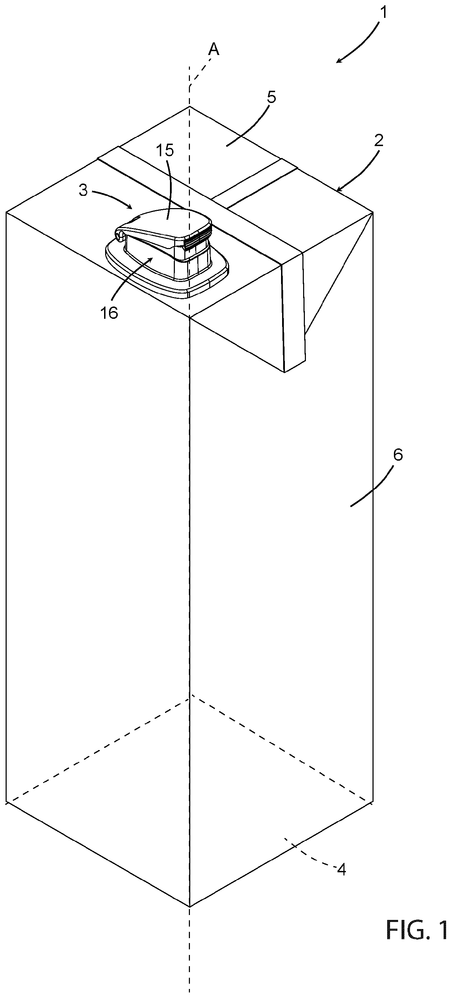

With particular reference to Figure 1, main body 2 may extend along a longitudinal axis A.

In more detail, main body 2 may comprise a first wall portion 4, preferentially being transversal, more preferentially perpendicular, to axis A and, from which main body 2 extends. Most preferentially, first wall portion 4 may define a support surface of package 1, preferentially main body 2, which can be put in contact with a support, such as a shelf, e.g. when, in use, being exposed within a sales point or within a storage.

First wall portion 4 may define a bottom wall of package 1, preferentially main body 2, e.g. with package 1 being placed on the support and/or during an outpouring action of the pourable product from package 1.

Preferentially, main body 2 may also comprise a second wall portion 5 opposite to first wall portion 4.

Preferentially, second wall portion 5 may define a top wall of main body 2, e.g. with package 1 being placed on the support and/or during an outpouring action of the pourable product from package 1.

As shown, opening device 3 may be coupled to second wall portion 5.

As shown in Figure 1, first wall portion 4 and second wall portion 5 may be parallel to one another. Alternatively, second wall portion 5 could be inclined with respect to first wall portion 4.

Additionally, package 1, preferentially main body 2, may also comprise a side wall 6 extending along longitudinal axis A and between first wall portion 4 and second wall portion 5. Preferentially, side wall 6 may be connected to first wall portion 4 and second wall portion 5.

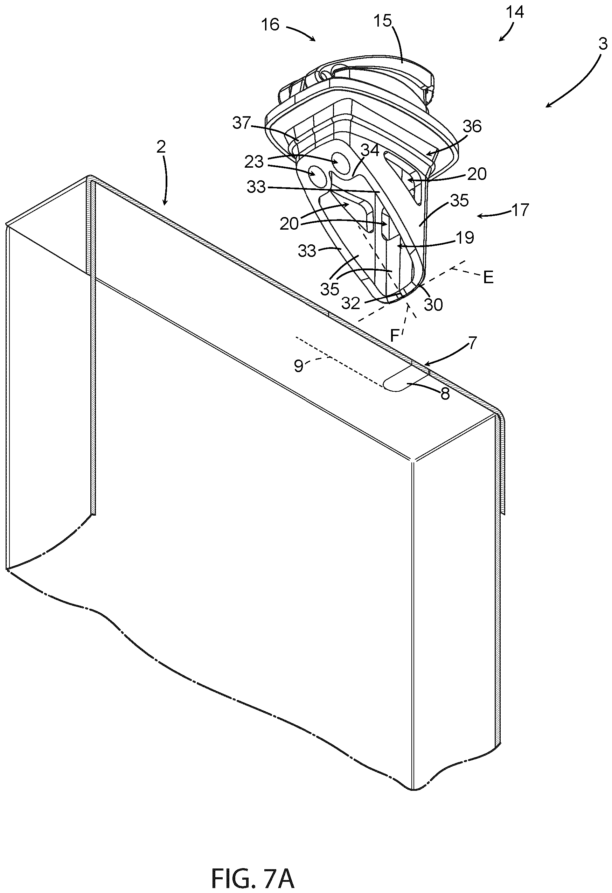

With particular reference to Figures 7A to 7C, package 1, preferentially main body 2, comprises a designated pour opening area 7 (only partially shown). Preferentially, pour opening surface 7 is configured to be opened and/or ruptured and/or cut so as to allow for the out-pouring of the pourable product from main body 2.

Designated pour opening area 7 may be defined by a through hole covered with a separation membrane 8 and two parallel weakening lines 9 extending from and away the through hole. As will be explained in more detail, opening device 3 is configured to cut separation membrane 8 and to induce a breaking of the packaging material of main body 2 along weakening lines 9.

Separation membrane 8 may comprise a gas- and light-barrier material, e.g. aluminum foil or a film comprising ethylene vinyl alcohol (EVOH).

In particular, separation membrane 8 may be defined by a portion of the multilayer packaging material, preferentially a portion of the layers of the web of packaging material being different from the layer of fibrous material.

Preferentially, designated pour opening area 7 may be provided on second wall portion 5.

Opening device 3 is configured to be partially placed within package 1, preferentially main body 2.

In particular, opening device 3 can be removably connected to package 1, preferentially main body 2, more particular such that after use a user can detach opening device 3 from main body 2 and attach opening device 3 to a new main body 2.

In this way, one avoids providing an opening device on each main body 2, which needs to be discharged together with main body 2.

Opening device 3 can be used on many main bodies 2 thereby allowing for an overall reduction of plastic consumption.

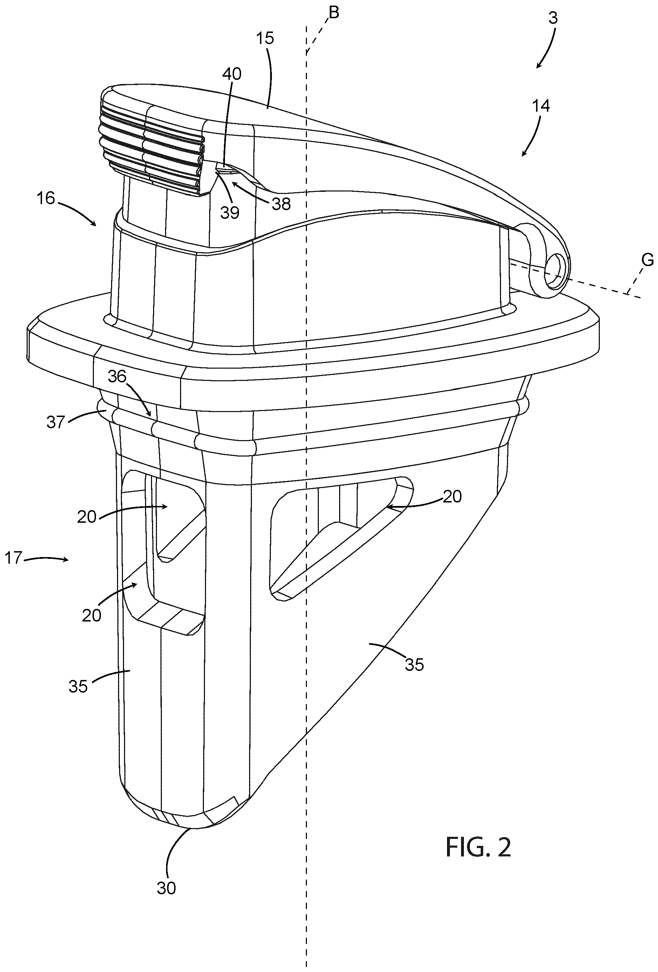

With particular reference to Figures 2 to 6, opening device 3 comprises a main structure 14 configured to be removably coupled to main body 2. Preferentially, main structure 14 may extend along a longitudinal axis B.

More specifically, opening device 3 may also comprise a closing element 15 coupled and/or couplable to main structure 14. In particular, closing element 15 is hinged to main structure 14.

With reference to Figures 1 to 6, opening device 3, preferentially main structure 14, comprises:
- an outer body 16 configured to be arranged and/or being arranged outside of package 1, preferentially main body 2, in particular with opening device 3 being coupled to main body 2; and
- a piercing body 17 configured to pierce designated pour opening area 7 and to be placed within or inside package 1, preferentially main body 2.

In other words, with opening device 3 being coupled to main body 2, outer body 16 is arranged in an outer space and piercing body 17 is arranged in an inner space of package 1, in particular main body 2, the inner space being filled with the pourable product.

In more detail, opening device 3, preferentially piercing body 17, is configured to pierce designated pour opening area 7 by means of and/or during a translatory movement along a linear axis, and preferentially without any rotational movement.

Opening device 3, preferentially outer body 16, may comprise an outlet opening 18 configured to allow for an outpouring of the pourable product from package 1.

Additionally, piercing body 17 may carry and/or comprise at least one main inlet opening 19, in particular being spaced apart from outlet opening 18 along a central axis B of opening device 3, in particular main structure 14.

Moreover, main inlet opening 19 and outlet opening 18 face one another.

Additionally, piercing body 17 also comprises auxiliary inlet openings 20, in particular being interposed between main inlet opening 19 and outlet opening 18. In the specific case shown, piercing body 17 comprises three auxiliary inlet openings 20.

Main inlet opening 19 has a central axis being inclined with respect to central axis B.

Advantageously, each auxiliary inlet opening 20 is interposed between main inlet opening 19 and outlet body 16.

Moreover, each auxiliary inlet opening 20 has a respective central axis (substantially) perpendicular to central axis B.

Opening device 3, preferentially main structure 14, comprises a flow channel 21 (for the pourable product) extending along central axis B and from main inlet opening 19 to outlet opening 18. In particular, main inlet opening 19 and outlet opening 18 are in fluidic connection with one another by means of flow channel 21.

Additionally, auxiliary inlet openings 20 do not face but are in fluidic connection with outlet opening 18.

In particular, main inlet opening 19 is configured to allow for the pourable product to enter flow channel 21.

Additionally, also auxiliary inlet openings 20 are configured to allow for an inflow of the pourable product into flow channel 21.

In more detail, flow channel 21 may comprise a first section being arranged within piercing body 17 and a second section being arranged within outer body 16.

Main structure 14 may be formed as a single piece, e.g. main structure 14 may be molded or 3D printed as a single piece.

It is noted that opening device 3 is configured to be connected to the main body 2 of the package 1 by being translated, towards the main body 2, along an axis parallel to central axis B. Also, the opening device 3 is configured to be removed from the main body 2 by being translated, away from the main body 2, along said axis parallel to the central axis B.

According to some preferred non-limiting embodiments, opening device 3, in particular main structure 14, may also comprise one or more auxiliary channels 22, preferentially at least two, configured to allow for an air flow between an outer space and an inner space of main body 2. In this way, one allows to improve the flow of the pourable product within flow channel 21 and out of outlet opening 18.

Each auxiliary channel 22 may comprise and/or extend between a first opening 23 and a second opening 24.

In particular, each first opening 23 and the respective second opening 24 may be (linearly) spaced apart from one another along a (linear) central axis C, more specifically being parallel (or substantially parallel) to central axis B.

In particular, auxiliary channels 22 may be comprised within main structure 14 (i.e. be integral thereto).

In more detail, outer body 16 may comprise each second opening 24 and/or piercing body 17 may comprise each first opening 23.

In further detail, each auxiliary channel 22 may comprise a first zone and a second zone extending within, respectively, piercing body 17 and outer body 16.

With particular reference to Figures 2 to 7C, piercing body 17 comprises a cutting surface 30 configured to cut at least a portion of designated pour opening area 7, in particular separation membrane 8, during an insertion (see

Figures 7A to 7C) of opening device 3 into package 1, in particular main body 2.

Cutting surface 30 extends along a first axis E; in other words, cutting surface 30 is elongated along first axis E, i.e. cutting surface 30 is not defined by a tip or the like.

In particular, the cutting surface 30 extends linearly along said first axis E.

Additionally, cutting surface 30 (and/or first axis E) is laterally displaced along a second axis F from central axis B and main inlet opening 19.

In particular, first axis E and second axis F are perpendicular to one another.

Advantageously, main inlet opening 19 as delimited by rim 31 is obliquely inclined with respect to central axis B and/or outlet opening 18.

Opening device 3, in particular piercing body 17, comprises a rim 31 delimiting main inlet opening 19.

In more detail and with reference to Figures 1 to 7C, main inlet opening 19 as delimited by rim 31 extends along a third axis and fourth axis perpendicular to the third axis.

In further detail, rim 31 comprises at least a main portion 32. Moreover, rim 31 also comprises two auxiliary portions 33 displaced from one another and extending from (and being connected to) main portion 32 and a further portion 34 opposite to main portion 32 and being connected to auxiliary portions 33.

In particular, auxiliary portions 33 are displaced from one another along the third axis and main portion 32 and further portion 34 are displaced from one another along the fourth axis. Auxiliary portions 33 are elongated substantially perpendicular to main portion 32. In particular, auxiliary portions 33 are elongated substantially linearly and the main portion 32 (i.e. the cutting surface 30) extends from one auxiliary portion 33 to the other auxiliary portion 33. Even more in particular, the two auxiliary portions 33 extend perpendicularly to said first axis E from a respective first end to a respective second end; the main portion 32 comprising the cutting surface 30 extends along the first axis E, from the first end of one of the two auxiliary portions 33 to the first end of the other one of the two auxiliary portions 33.

More specifically, rim 31 has a substantially rectangular shape and, accordingly, main inlet opening 19 extends along a substantially rectangular area. However, the shape may be not precisely rectangular due to the auxiliary portions 33 being slightly curved and/or due to further portion 34 being shaped so as to encircle first opening 23 of auxiliary channels 22.

With reference to Figures 2 to 7C, main portion 32 comprises cutting surface 30. Cutting surface 30 is the surface of piercing body 17 which has the maximum distance from outer body 16 (along central axis B). Hence, when piercing body 17 approaches designated pour opening area 7, cutting surface 30 is the first surface that touches designated pour opening area 7 and cuts it.

Advantageously, auxiliary portions 33 lie within and/or define a plane P, in particular the plane P being obliquely inclined with respect to outlet opening 18 and/or central axis B. Preferably, plane P is perpendicular to the first axis E.

Moreover, cutting surface 30 is displaced from plane P; i.e. cutting surface 30 does not lie within plane P. In particular, plane P is interposed between cutting surface 30 and outlet opening 18. In other words, cutting surface 30 projects from plane P.

In particular, each first opening 23 is adjacent to main inlet opening 19.

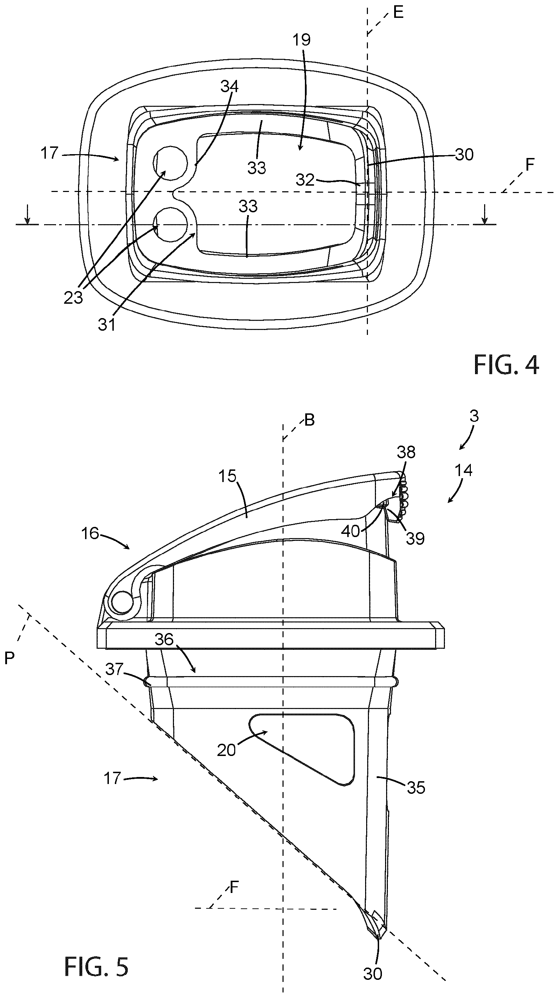

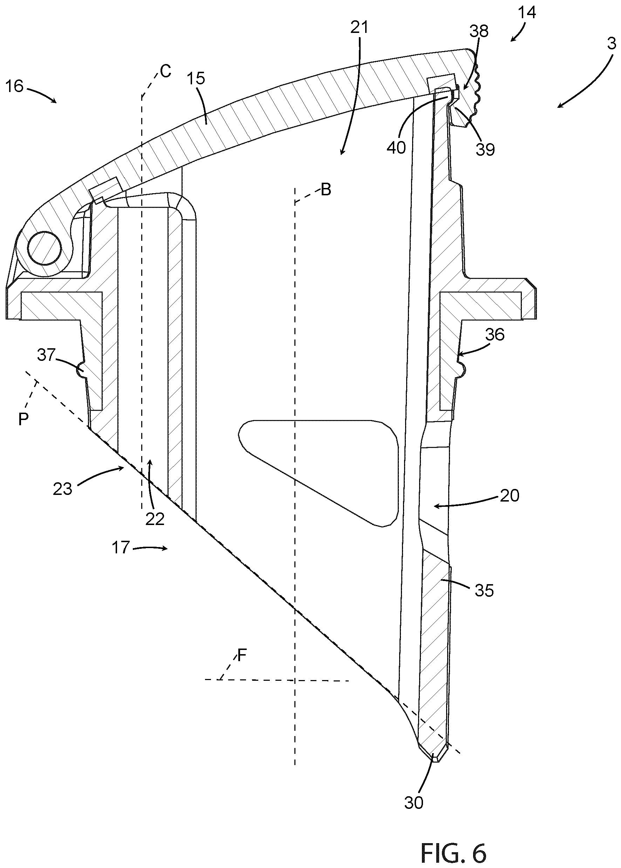

With particular reference to Figures 5 and 6, main portion 32 is more distanced from outer body 16 than further portion 34.

With particular reference to Figures 2, 3, 5 and 6, piercing body 17 comprises a plurality of walls 35, in particular four walls 35. More specifically, walls 35 are connected to and protrude from outer body 16.

Each wall 35 has an end section opposite to outer body 16. Moreover, each end section defines a respective portion of rim 31.

Additionally, at least some of walls 35 comprise each a respective auxiliary inlet opening 20.

Each auxiliary inlet opening 20 is interposed between rim 31 and outer body 16. In the illustrated embodiment, a first auxiliary inlet opening 20 is provided between main portion 32 and outer body 16; also, a second and a third auxiliary inlet opening 20 are provided between auxiliary portions 33 and outer body 16.

Each auxiliary inlet opening 20 defines an inlet axis perpendicular to central axis B. In particular, each auxiliary inlet opening 20 has a rim which surrounds said inlet axis, the rim being perpendicular to said inlet axis and parallel to central axis B.

Auxiliary inlet openings 20 allow to reduce an amount of the pourable product which remains within main body 2 after pouring.

Advantageously, an extension of the respective wall 35 carrying main portion 32 is larger than the respective extension of the other walls 35.

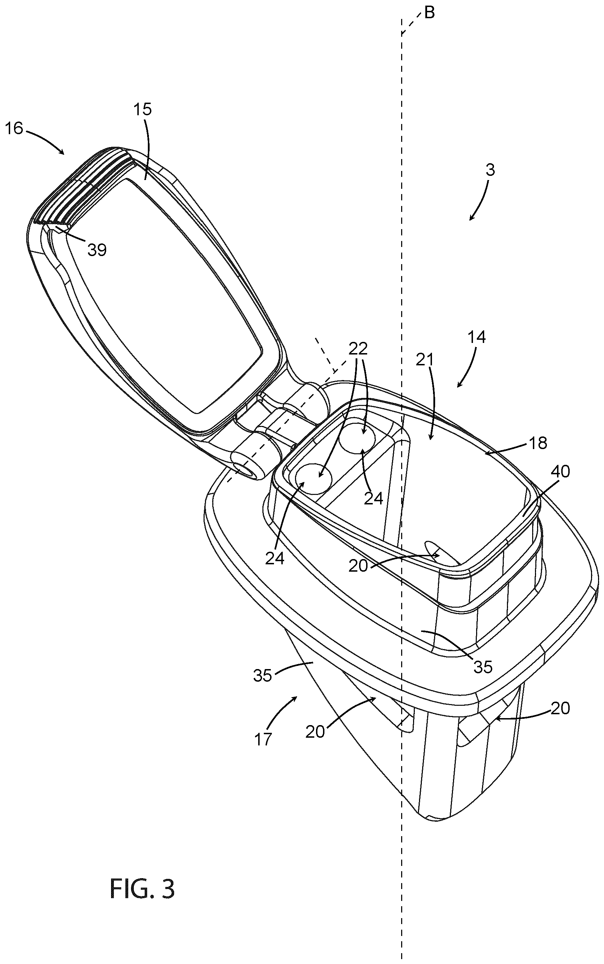

With particular reference to Figures 3, 4 and 6 to 7C, auxiliary channels 22 are laterally displaced from main inlet opening 19, in particular into a direction parallel to the fourth axis.

Additionally, main inlet opening 19 is interposed between cutting surface 30 and the one or more auxiliary channels 22.

The Applicant has found that the outpouring characteristics of the pourable product are optimized with auxiliary channels 22 being parallel to one another and/or having the same shape.

Most advantageously, auxiliary channels 22 have a cylindrical shape and the same length and diameter.

With particular reference to Figures 2, 5 and 6, opening device 3 further comprises an engagement surface 36 configured to engage a rim delimiting a hole formed after placement of piercing body 17 withing main body 2.

In particular, engagement surface 36 is connected to (provided on) piercing body 17.

Engagement surface 36 may comprise a sealing layer configured to seal an interface defined between the rim and piercing body 17. So, sealing layer prevents the pourable product to flow out of package 1 through the interface defined between the rim of package 1 and piercing body 17.

Preferably, piercing body 17 and the sealing layer are formed from different material. In particular, piercing body 17 is formed from a first material, such as a polymeric material, and the sealing layer is formed from a second material, such as a rubber material, different from the first material.

Advantageously, opening device 3, in particular the sealing layer, also comprises an annular bump 37 protruding away from piercing body 17 and being configured to engage with a wall of package 1, in particular main body 2.

Annular bump 37 preferably extends continuously around a periphery of engagement surface 36. Annular bump 37 preferably extends along the periphery of engagement surface 36 perpendicular to central axis B.

Annular bump 37 allows to further increase resistance to a removal of opening device 3 from main body 2; i.e. annular bump 37 increases a retainment force of opening device 3 on main body 2.

According to a non-illustrated embodiment, at least two annular bumps 37 may be provided. In particular, said at least two annular bumps 37 extend parallel to each other, even more in particular they extend along the periphery of engagement surface 36 perpendicularly to central axis B. With particular reference to Figures 1 to 3, 5 and 6, closing element 15 is selectively controllable into a closed position (see Figures 1, 2, 5 and 6) and an open position (Figure 3) at which closing element 15 may be configured to, respectively, cover and open outlet opening 18, and preferentially also each second opening(s) 24.

Closing element 15 may be angularly moveable about a hinge axis G between the closed position and the open position.

With particular reference to Figures 3 and 6, opening device 3 may comprise a locking group 38 configured to lock closing element 15 in the closed position. In this way, one guarantees that no undesired movement of closing element 15 from the closed position to the open position may occur.

Locking group 38 comprises a first element 39 and a second element 40 connected to, in particular integrally connected to, respectively closing element 15 and outer body 16.

More specifically, first element 39 and second element 40 are designed to engage with one another with closing element 15 being in the closed position and such to impede an unwanted movement of closing element 15 into the open position. In particular, a user for moving closing element 15 into the open position needs to exert a force larger than a locking force originating from the interaction of first element 39 and second element 40.

In further detail, second element 40 may protrude from an outer surface of outer body 16 and first element 39 may protrude from an inner surface of closing element 15.

According to the example shown, second element 40 is provided on a front portion of outer body 16. Alternatively or in addition, one second element 40 could be provided on a lateral portion of outer body 16 (with the respective first element 38 being arranged on closing element 13 such that first element 38 and second element 39 can interact with one another).

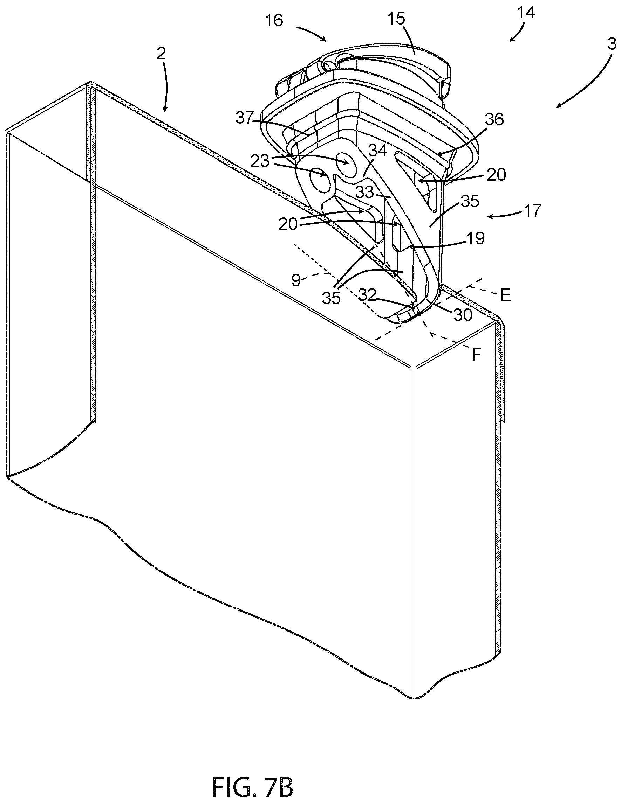

The use of opening device 3 will be explained by particular reference to Figures 7A to 7C. Package 1, preferentially main body 2, has intact separation membrane 8 and intact weakening lines 9. The user gets opening device 3, approaches piercing body 17 towards designated pour opening area 7 (by moving opening device 3 along an axis parallel to axis B) and starts to pierce separation membrane 8 by means of cutting surface 30 (see Figures 7A and 7B). By further pressing piercing body 17 into main body 2 auxiliary portions 33 interact with main body 2 and lead to a desired rupture of main body 2 along weakening lines 9.

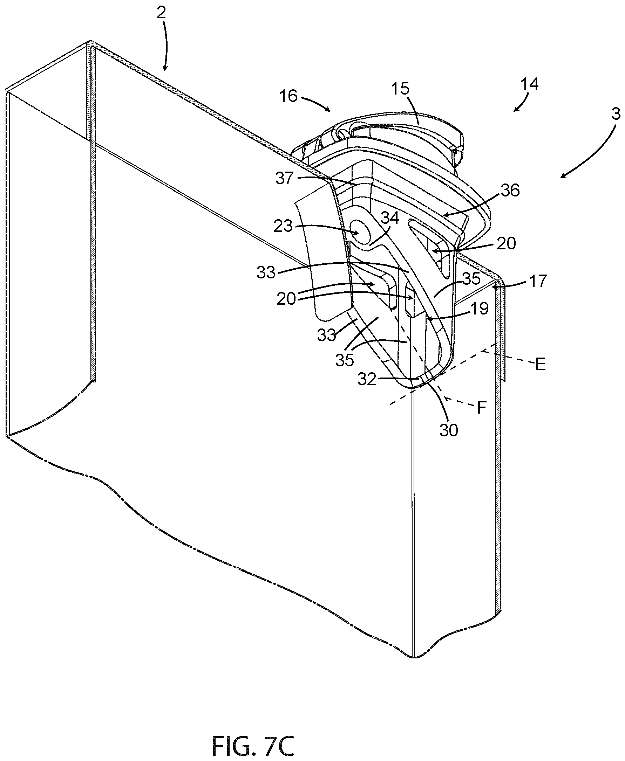

At some point engagement surface 36 engages with the rim of main body 2 and opening device 3 is blocked to main body 2 by means of friction (see Figure 7C).

Additionally, annular bump 37 increases the resistance to a removal of opening device 3 from main body 2.

During use, the user may selectively control closing element 15 between the closed position and the open position.

If desired (e.g. after fully emptying main body 2) it is possible to remove opening device 3 from main body 2, preferentially to clean opening device 2, and to removably apply opening device 3 to a new main body 2.

The advantages of packages 1 and/or of opening device 3 according to the present invention will be clear from the foregoing description.

In particular, opening device 3 allows to be used on different main bodies 2, so as to avoid providing respective open devices on each main body 2. This should allow to reduce plastic consumption.

Also, thanks to the design of cutting surface 30 being elongated along a first axis E displaced from central axis B, piercing of separation membrane 8 is particularly precise and easy for the consumer.

Moreover, thanks to the peculiar design of the opening device, flow of the pourable product is smoother and amount of product which remains into the main body after pouring is minimized.

Moreover, auxiliary channels 22 allow an even improved flow of the pourable product. In fact, air enters main body 2 through auxiliary channels 22 while pourable product flows out of outlet opening 18.

Additionally, annular bump 37 increases retention of opening device 3 on main body 2 and improves the sealing at an interface defined between the rim of the package and piercing body 17.

Clearly, changes may be made to package 1 and/or opening device 3 as described herein without, however, departing from the scope of protection as defined in the accompanying claims.

## Claims

1. Reusable opening device (3) for a package (1) filled with a pourable product and having a designated pour opening area (7);
the opening device (3) being configured to be removably connected to a main body (2) of the package (1) and comprising:
- an outer body (16) configured to be placed outside of the main body (2) and having an outlet opening (18) configured to allow for an outpouring of the pourable product; and
- a piercing body (17) configured to pierce the designated pour opening area (7) and to be placed within the package (2);
wherein the opening device (3) comprises a flow channel (21) extending along a central axis (B) of opening device (3) and between at least one main inlet opening (19) of the piercing body (17) and the outlet opening (18);
wherein the inlet opening (19) is configured allowing the inlet of the pourable product into the flow channel (21);
wherein the piercing body (17) comprises a cutting surface (30) configured to cut at least a portion of the designated pour opening area (7) during an insertion of the opening device (3) into the package (1);
wherein the cutting surface (30) extends along a first axis (E);
wherein the first axis (E) is laterally displaced along a second axis (F), perpendicular to the first axis (E), from the central axis (B) and from the main inlet opening (19).

2. Opening device (3) according to claim 1, comprising a rim (31) delimiting the main inlet opening (19);
wherein a main portion (32) of the rim (31) comprises the cutting surface (30).

3. Opening device (3) according to claim 2, wherein the rim (31) comprises two auxiliary portions (33) displaced from one another and extending from the main portion (32).

4. Opening device (3) according to claim 3, wherein the two auxiliary portions (33) lie within and/or define a plane (P); wherein the cutting surface (30) is displaced from the plane (P).

5. Opening device (3) according to claim 4, wherein the two auxiliary portions (33) are transversal to the main portion (32), and the plane (P) is obliquely inclined with respect to the central axis (B).

6. Opening device (3) according to any one of the claims 3 to 5,
wherein the two auxiliary portions (33) extend perpendicularly to said first axis (E) from a respective first end to a respective second end;
wherein the main portion (32) comprising the cutting surface (30) extends along the first axis (E), from the first end of one of the two auxiliary portions 33 to the first end of the other one of the two auxiliary portions 33.

7. Opening device (3) according to any one of the preceding claims, further comprising one or more auxiliary channels (22) configured to allow for an air flow between an outer space and an inner space of the main body (2).

8. Opening device (3) according to claim 6, comprising at least two auxiliary channels (22) being parallel to one another and/or having the same shape, wherein the auxiliary channels (22) have a cylindrical shape and the same length and diameter.

9. Opening device (3) according to any one of claims 7 or 8, wherein each auxiliary channel (22) comprises a first zone extending within the piercing body (17) and a second zone extending within the outer body (16).

10. Opening device (3) according to any one of claims 7 to 9, wherein each auxiliary channel (22) comprises and extends between a first opening (23) and a second opening (24); wherein the first opening (23) is arranged such to be placed within the main body (2) and the second opening (24) is arranged such to be placed outside from the main body(2);
wherein each first opening (23) is adjacent to the main inlet opening (19).

11. Opening device (3) according to any one of claims 7 to 10, wherein the main inlet opening (19) is interposed between the cutting surface (30) and the one or more auxiliary channels (22).

12. Opening device (3) according to any one of the preceding claims, further comprising an engagement surface (36) configured to engage a rim delimiting a hole formed after placement of the piercing body (17) within the main body (2), the engagement surface (36) being provided on the piercing body (17); wherein the engagement surface (36) comprises a sealing layer;
the sealing layer being configured to seal an interface defined between the rim and the opening device (3).

13. Opening device (3) according to claim 12, wherein the piercing body (17) comprises a first material, and the sealing layer comprises a second material different from the first material.

14. Opening device (3) according to claim 12 or 13, wherein the engagement surface (36) comprises an annular bump (37) protruding from the piercing body (17) and configured to engage with a wall of the main body (2) and to increase a retainment force of the opening device (3) on the main body (2).

15. Opening device (3) according to any one of the preceding claims, further comprising a closing element (15) selectively controllable into a closed position and an open position at which the closing element is configured to, respectively, close and open the outlet opening (18);
wherein the closing element (15) is hinged to the outer body (16).

16. Opening device (3) according to claim 15, wherein the closing element (15) comprises a locking group (38), wherein the locking group (38) includes a first element (39) and a second element (40), wherein the first element (39) is associated and/or connected to the closing element (15) and the second element (40) is associated and/or connected to the outer body (16);
wherein the first element (39) and the second element (40) are configured to engage with one another with the closing element (15) being in the closed position and such to impede an unwanted movement of the closing element (15) into the open position.

17. Package (1) for a pourable product comprising a main body (2) formed from a multilayer packaging material and a reusable opening device (3) according to any one of the preceding claims.
